# EUROPEAN PATENT APPLICATION

(11) **EP 1 953 462 A2**
(43) Date of publication of application: **06.08.2008**
(21) Application number: 08001631.4
(22) Date of filing: 29.01.2008
(51) Int. Cl.: F24F 3/16, F24F 6/04

(54) **Air filtering apparatus**

(30) Priority: 30.01.2007 JP 2007018990; 30.01.2007 JP 2007018922; 30.01.2007 JP 2007018991
(71) Applicant: Sanyo Electric Co., Ltd., Osaka 570-8677 (JP)
(72) Inventor: Fukushima, Toshio, Ota-shi, Gunma 373-0038 (JP); Arakawa, Toru, Tatebayasi-shi, Gunma 374-0066 (JP); Iijima, Morinobu, Konosu-shi, Saitama 365-0045 (JP); Kobayashi, Hiroyuki, Ora-gun, Gunma 370-0533 (JP); Dobashi, Mitsuhiro, Kumagaya-shi, Saitama 360-0033 (JP); Hatano, Dai, Ora-gun, Gunma 370-0533 (JP)
(74) Representative: Glawe, Delfs, Moll

(57) **Abstract**

In an air filtering apparatus including a housing, an electrolytic water generator for generating electrolytic water by electrolyzing water, a gas-liquid contact member to which electrolytic water is supplied, a water receiving tray that is disposed below the gas-liquid contact member and receives electrolytic water discharged from the gas-liquid contact member, an electrolytic water circulating unit for supplying the electrolytic water received in the water receiving tray as electrolysis target water to the electrolytic water generator, and an air blower for blowing indoor air to the gas-liquid contact member to bring the indoor air into contact with the electrolytic water in the gas-liquid contact member, thereby filtering the air, a water supply unit having a water supply pipe connected to an external water source to supply water from the external water source through the water supply pipe to the water receiving tray, and a water supply valve that is opened or closed in accordance with the water level of water stocked in the water receiving tray is provided above the water receiving tray.

## Description

### BACKGROUND OF THE INVENTION

### 1. Field of the Invention

The present invention relates to an air filtering apparatus which can remove microorganisms such as bacteria, virus, fungus, etc. (hereinafter merely referred to as "virus, etc.") floating in the air.

### 2. Description of the Related Art

For the purpose of removing virus, etc. floating in the air, there has been generally proposed an air filtering apparatus in which electrolytic water is supplied to a humidifying element, mist of the electrolytic water is sprayed into the air so as to be brought into direct contact with microorganisms floating in the air, thereby inactivating virus, etc. (for example, see JP-A-2002-181358).

The air filtering apparatus described above is designed so that particulate electrolytic mist is diffused into a room, and thus there are problems that the reach range of the electrolytic mist is limited and also that it effectively operates in a relatively small space whereas it hardly operates in such a large-space environment that electrolytic mist hardly reaches virus, etc., that is, in an elementary/junior high/high school, long-term care insurance facilities, a hospital or the like.

Furthermore, in the air filtering apparatus, water is supplied from an external water supply source into an electrolytic bath of the air filtering apparatus at a predetermined time interval so that the water level in the electrolytic bath is set to a predetermined water level. On the other hand, electrolytic water supplied to the humidifying element is discharged to the outside through a drain pipe. Accordingly, when the air filtering apparatus is continuously operated for a long time in such a large space as described above, the consumption amount of water is tremendous.

### SUMMARY OF THE INVENTION

The present invention has been implemented in view of the foregoing problem, and has an object to provide an air filtering apparatus in which air in a large space can be filtered and the consumption amount of water can be reduced.

In order to attain the attain the above object, According to the present invention, an air filtering apparatus comprising a housing, an electrolytic water generator for generating electrolytic water by electrolyzing water, a gas-liquid contact member to which electrolytic water is supplied, a water receiving tray that is disposed below the gas-liquid contact member and receives electrolytic water discharged from the gas-liquid contact member, an electrolytic water circulating unit for supplying the electrolytic water received in the water receiving tray as electrolysis target water to the electrolytic water generator, an air blower for blowing indoor air to the gas-liquid contact member to bring the indoor air into contact with the electrolytic water in the gas-liquid contact member, thereby filtering the air, and a water supply unit that is disposed above the water receiving tray and supplies water to the water receiving tray.

In the air filtering apparatus, the water supply unit has a water supply pipe connected to an external water source to supply water from the external water source through the water supply pipe to the water receiving tray.

In the air filtering apparatus, the water supply unit is further equipped with a water supply valve that is opened or closed in accordance with the water level of water stocked in the water receiving tray, a first water supply pipe connected to an upstream side end portion of the water supply valve, and a second water supply pipe connected to a downstream side end portion of the water supply valve and having a water supply port formed at one end thereof, the water supply port being disposed to be spaced from the water surface of the water stocked in the water receiving tray at such a distance that the water supply port is prevented from touching the water surface of the water stocked in the water receiving tray.

In the air filtering apparatus, the water supply valve is disposed so that the downstream side end portion thereof is located at a higher position than the upstream side end portion thereof.

In the air filtering apparatus, the water receiving tray has a water receivingportionthat is disposed below the gas-liquid contact member and receives the electrolytic water, a stock portion which is formed to have a deeper bottom portion than the water receiving portion and stocks the electrolytic water and water supplied from the water supply unit, and a filter member that is disposed at the interconnection portion between the water receiving portion and the stock portion and collects solid materials contaminated in the electrolytic water flowing from the water receiving portion into the stock portion, the water supply port being disposed above the filter member.

In the air filtering apparatus, the water supply unit has a water supply pipe that is connected to an external water supply source and supplies water from the external water source therethrough to the water receiving tray, and a water supply valve that is provided in the water supply pipe and opened/closed to adjust the water supply to the water receiving tray through the water supply pipe.

The air filtering apparatus further comprises a water level detecting unit for detecting the water level of the water stocked in the water receiving tray, and a controller for controlling the opening/closing operation of the water supply valve in accordance with the water level detected by the water level detecting unit, whereby the amount of water to be supplied to the water receiving tray is adjusted in accordance with the water level detected by the water level detecting unit.

In the air filtering apparatus, the water level detecting unit comprises a first float switch for outputting a first detection signal to the controller when the water level in the water receiving tray underruns a predetermined water-supply starting water level, and a second float switch for outputting a second detection signal to the controller when the water level in the water receiving tray exceeds a predetermined water-supply stopping water level, and the controller controls the water supply valve so that the water supply valve is opened when the controller receives the first detection signal from the first float switch and is closed when the controller receives the second detection signal from the second float switch.

In the air filtering apparatus, when receiving an air filtering operation starting instruction, the controller judges on the basis of the presence of absence of the input of the second detection signal whether the water level in the water receiving tray reaches the water-supply stopping water level, and if it is judged that the water level in the water receiving tray does not reach the water-supply stopping water level, the controller opens the water supply valve irrespective of the presence or absence of the input of the first detection signal, and keeps the water supply valve open until the second detection signal is input.

In the air filtering apparatus, the controller reports an error when the second detection signal is not input until a predetermined water supply time elapses from the opening time of the water supply valve.

In the air filtering apparatus, the water receiving tray comprises a water receiving portion that is disposed below the gas-liquid contact member and receives the electrolytic water, a stock portion interconnected to the water receiving portion and formed to have a deeper bottom than the water receiving portion, and a filtermember that is disposed at the interconnection portion between the water receiving portion and the stock portion and removes foreign materials contaminated in water flowing from the water receiving portion into the stock portion, the water supply port of the water supply pipe being disposed above the filter member.

In the air filtering apparatus, the electrolytic water generated in the electrolytic water generator is passed through the filter member to the stock portion, and mixed with waster supplied from the water supply unit, and the electrolytic water mixed with the water supplied from the water supply portion in the stock portion is supplied to at least one of the electrolytic water generator and the gas-liquid contact member through the electrolytic water circulating unit.

The air filtering apparatus further comprises a drain unit that is disposed below the water receiving tray so as to be connected to the water receiving tray and discharges the water stocked in the water receiving tray to the outside, wherein the housing is divided into an upper chamber and a lower chamber by a partition plate, the electrolytic water generator, the gas-liquid contact member, the water receiving tray, the electrolytic water circulating unit and the water supply unit are disposed in the upper chamber, and the air blower and the drain unit are disposed in the lower chamber.

In the air filtering apparatus, the water receiving tray has a deep bottom portion and a shallow bottom portion having a shallower bottom than the deep bottom portion, and the drain unit includes a drain portion connected to an external drain circuit, and a drain valve unit comprising a drain pipe through which the deep.bottom portion and the drain portion are connected to each other, a drain valve for opening/closing the drain pipe, and a bypass pipe that bypasses the drain valve and connects the shallow bottom portion and the drain portion.

In the air filtering apparatus, the drain portion has a trap pipe in which a part of water discharged from the water receiving tray is stocked as sealing water.

According to the present invention, electrolytic water mist is not diffused into a room, but indoor air is brought into contact with electrolytic water in the gas-liquid contact member to filter the indoor air and the filtered air is blown into the room. Therefore, indoor air can be circulated and air filtering in a large space can be performed.

According to the present invention, fresh water is supplied from the water supply unit to the water receiving tray, and thus the fresh water and electrolytic water dropping from the gas-liquid contact member are mixed with each other. Therefore, fresh water can be supplemented to electrolytic water circulating in an electrolytic water circulating passage of the air filtering apparatus with a simple construction. Furthermore, the water supply unit is provided separately from the electrolytic water circulating passage, so that the water supply may be performed in accordance with the amount of water stocked in the water receiving tray, and thus the control can be simplified.

Furthermore, the water supply unit that is connected to the water supply pipe and supply water passing through the water supply pipe to the water receiving tray is disposed above the water receiving tray. Therefore, when electrolytic water is used in a circulating style, fresh water can be supplied to circulating electrolytic water with a simple construction.

Still furthermore, according to this embodiment, the electrolytic water discharged from the water receiving tray is withdrawn through the electrolytic water circulating unit (passage), and it is circulated and supplied as electrolysis water to the electrolytic water generator, so that the consumption amount of water can be reduced. Furthermore, the controller controls the water supply valve of the water supply unit so that the water supply valve is opened or closed in accordance with the water level in the water receiving tray. Therefore water can be supplied from the external water supply source by only the amount corresponding to the shortfall caused by vaporization or the like.

Still furthermore, most of the apparatus construction can be made common between the case where a water supply tank or the like is used as an inner water supply source in the air filtering apparatus and the case where water is supplied from the external water supply source.

Still furthermore, according to the present invention, it can be detected by the first float switch whether the water level in the water receiving tray is lower than the water-supply starting.water level. Furthermore, it can be also detected by the second float switch whether the water level in the water receiving tray is higher than the water-supply stopping water level. The controller controls the opening/closing operation of the water supply valve on the basis of the first detection signal and the second detection signal input from the first and second float switches so that water can be supplied to the water receiving tray by only the amount corresponding to the water lost in the water receiving tray due to vaporization or the like.

Still furthermore, according to the present invention, if it is judged that the water level in the water receiving tray does not reach the water-supply stopping water level when the operation start instruction of the air filtering apparatus is input, the water supply valve is opened, and the water supply valve is kept open until the water level in the water receiving tray exceeds the water-supply stopping water level. Therefore, when the air filtering operation is started, the water level in the water receiving tray can be surely set to the water-supply stopping water level.

Still furthermore, in the air filtering apparatus, when the water level in the water receiving tray does not reach the water-supply stopping the water level although the water supply valve provided to the water supply pipe is opened or the predetermined water supply time elapses, an error may be reported to a user or the like.

Still furthermore, according to the present invention, water (electrolytic water) from which foreign materials re removed by the filter member can be made to flow into the stock portion. Therefore, even when foreign materials such as scale, etc. are contained in electrolytic water discharged from the gas-liquid contact member, scale, etc. can be removed by the filter member and electrolytic water can be used in a circulating style. Furthermore, the water supply port is disposed above the filter member, and thus water in the stock portion can be prevented from flowing back through the water support port when the inside of the water supply pipe is set to negative pressure. Still furthermore, water supplied from a water supply source into the stock portion drops to the filter member, so that the dropping sound can be reduced as compared with the case where water is dropped to the water surface of the stock portion.

Still furthermore, according to the present invention, electrolytic water generated in the electrolytic bath is not directly supplied to the gas-liquid contact member, but it is guided through the filter member to the stock portion. Accordingly, electrolytic water containing foreign materials such as scale, etc. which are generated in the electrolytic bath can be prevented from being supplied to the gas-liquid contact member. Furthermore, the concentration of active oxygen species contained in electrolytic water is diluted in the stock portion. Therefore, in the electrolytic bath, electrolytic water can be generated with a higher concentration than the concentration of active oxygen species to be supplied to the gas-liquid contact member, and thus the concentration management can be more easily performed as compared with the case where electrolytic water containing a rare concentration of active oxygen species is generated.

As described above, according to the present invention, air in a large space can be filtered, and also electrolytic water can be used in a circulating style, so that the consumption amount of water can be reduced.

Still furthermore, according to the present invention, the drain valve unit which can discharge water stocked in the water receiving tray through the drain portion to the drain circuit is disposed below the water receiving tray. Therefore, by operating the drain unit (drain valve unit), water can be discharged through the drain portion to the external drain circuit. Accordingly, water stocked in the water receiving tray can be easily discharged, and water replace can be simply performed.

As described above, according to the present invention, the air filtering apparatus for supplying electrolytic water to the gas-liquid contact member in a circulating style can be implemented, water stocked in the water receiving tray can be easily discharged, and water can be simply replaced.

### BRIEF DESCRIPTION OF THE DRAWINGS

Fig. 1 is a perspective view showing an air filtering apparatus according to an embodiment of the present invention;
Fig. 2 is a back-side perspective view showing the air filtering apparatus according to the embodiment;
Fig. 3 is a perspective view showing the main construction of the inside of the air filtering apparatus of the embodiment;
Fig. 4 is a side cross-sectional view showing the air filtering apparatus of the embodiment;
Figs. 5A and 5B are diagrams showing a condition that electrolytic water is supplied in this embodiment;
Fig. 6 is a block diagram showing the functional construction of the air filtering apparatus; and
Fig. 7 is a flowchart showing water supply control processing in the embodiment.

### DETAILED DESCRIPTION OF THE PREFERRED EMBODIMENTS

Preferred embodiments according to the present invention will be described hereunder with reference to the accompanying drawings.

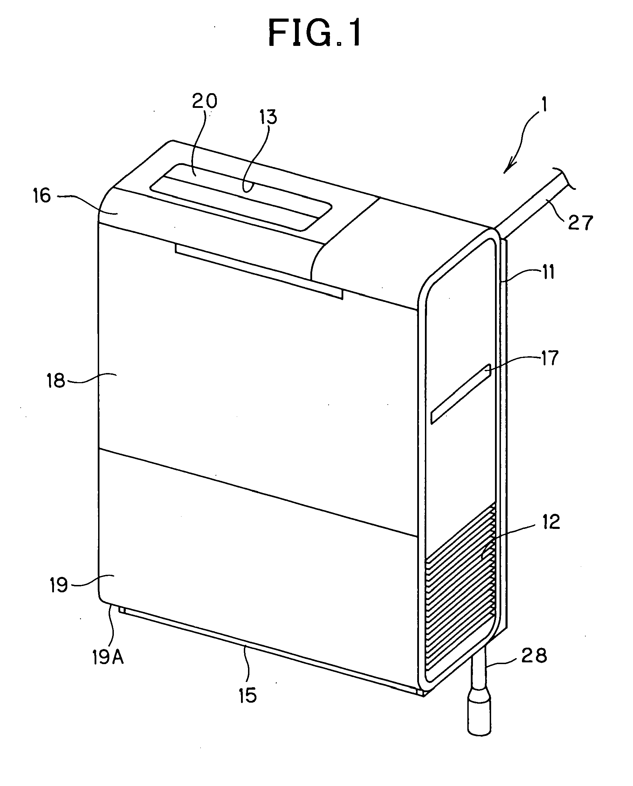

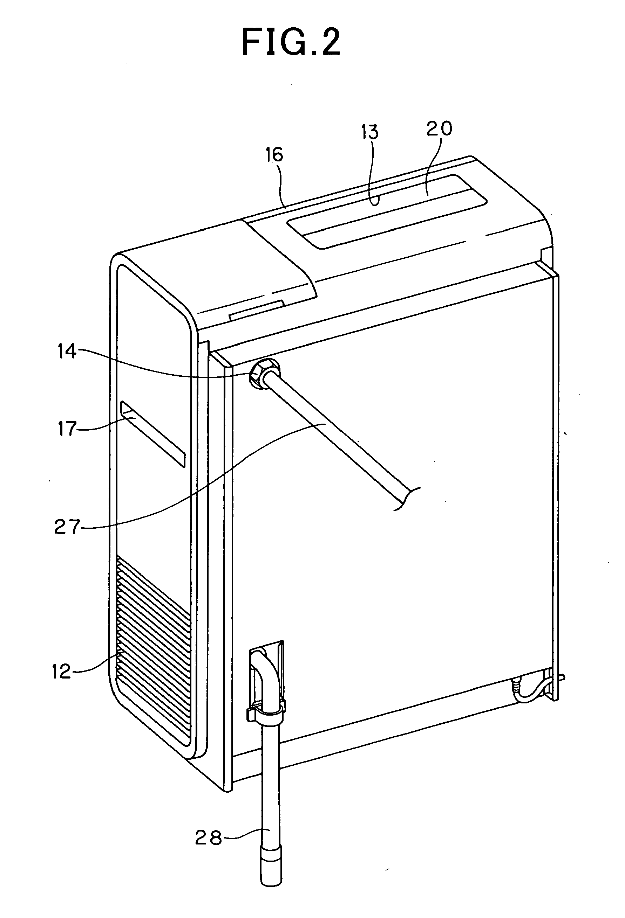

Fig. 1 is a perspective view showing an air filtering apparatus 1 according to an embodiment, and Fig. 2 is a back-side perspective view of the air filtering apparatus. According to the air filtering apparatus 1, water is electrolyzed to generate electrolytic water containing predetermined active oxygen species, indoor air sucked into the air filtering apparatus 1 is filtered by using the electrolytic water, and clean air after air filtering is blown into a room.

As shown in Fig. 1, the air filtering apparatus has a box-shaped housing 11 designed in an vertically long shape, and it is used while mounted on a floor, for example. Suction grilles 12 are formed at the lower portions of both the side surfaces of the housing 11, and an air suction port 15 is formed at the lower end portion of the front surface of the housing 11. Furthermore, an air blow-out port 13 is formed on the top surface of the housing 11, and an automatic louver 20 for changing the air blow-out direction is provided to the air blow-out port 13. The automatic louver 20 is designed so as to cover the air blow-out port 13 when the operation of the air filtering apparatus is stopped.

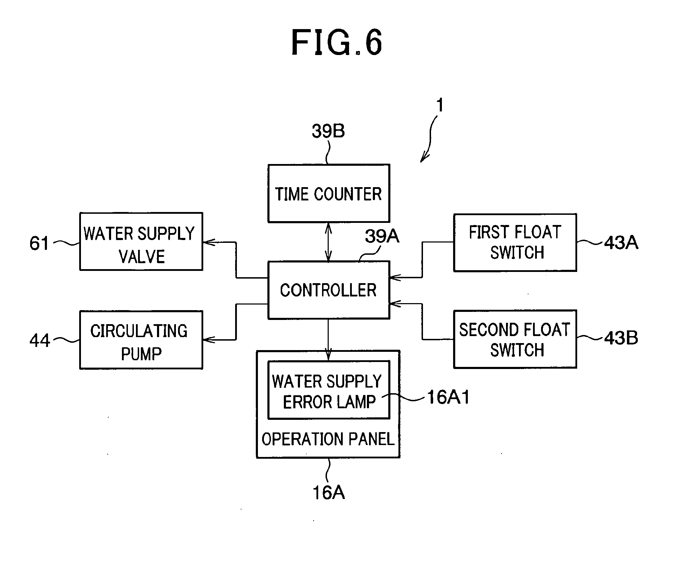

An operating lid 16 is disposed at the front surface side of the air blow-out port 13 on the top surface of the housing 11, and when the operating lid 16 is opened, an operating panel 16A (see Fig. 6) for executing various kinds of operations of the air filtering apparatus 1 is exposed. Furthermore, the operating panel 16A is provided with a water supply error lamp 16A1 for reporting a water supply error described later.

Furthermore, a gripportion 17 is formed at the upper portion of each of both the side surfaces of the housing 11. These grip portions 17 are recess portions which are hooked by hands when the housing 11 is carried by the hands, and the air filtering apparatus 1 can be lifted up and moved when the air filtering apparatus is conveyed.

Furthermore, a upper cover member 18 and a lower cover member 19 are freely detachably mounted on the front surface of the housing 11 so as to be arranged in the vertical direction, and the inner construction of the air filtering apparatus 1 is exposed when the upper cover member 18 and the lower cover member 19 are detached. The lower cover member 19 is equipped with an arcuate portion 19A bent toward the back surface side of the housing 11 at the lower end portion of the lower cover member 19, and the air suction port 15 is formed at the arcuate portion 19A.

Furthermore, as shown in Fig. 2, a water supply pipe connection port 14 for supplying water to the air filtering apparatus 1 is formed at the upper portion of the back surface of the housing 11, and a water supply pipe 27 intercommunicating with an external water supply source (for example, waterworks) is connected to the water supply pipe connection port 14. A drain pipe 28 for discharging water in the air filtering apparatus 1 to the outside is provided to the lower portion of the back surface of the housing 11. This drain pipe 28 is connected to an external drain circuit. As shown in Fig. 2, the drain pipe 28 extends to the lower side of the housing 11, and it is supported by a support jig 29 on the back surface of the housing 11. The drain pipe 28 may be supported by the support jig 29 so as to extend in the right-and-left direction in place of the downward direction.

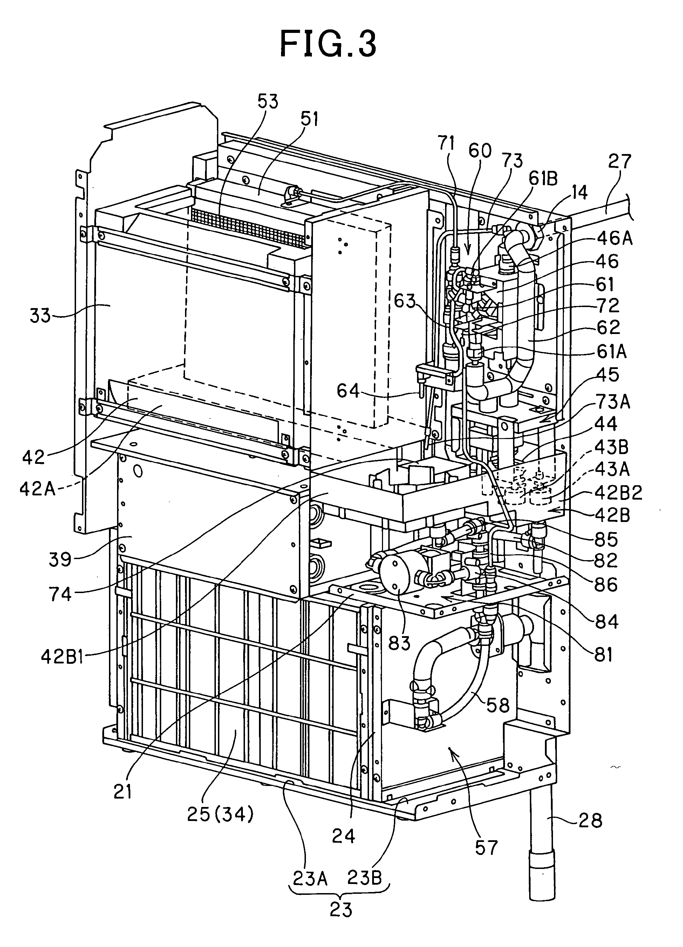

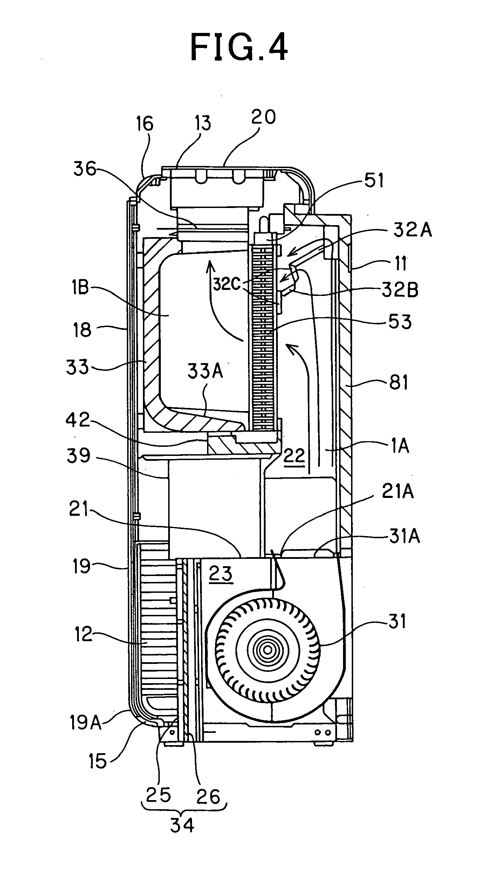

Next, the internal construction, of the air filtering apparatus 1 will be described with reference to Figs. 3 and 4.

Fig. 3 is a perspective view showing the main construction of the inside of the air filtering apparatus, and Fig. 4 is a side cross-sectional view showing the air filtering apparatus. The housing 11 is provided with a partition plate 21 through which the inside of the housing 11 is divided into upper and lower chambers 22 and 23 in the vertical direction.

The lower chamber 23 is further sectioned into right and left chambers 23A and 23B. An air blowing fan 31 (Fig. 4) and a fan motor (not shown) for driving the air blowing fan 31 are accommodated in the chamber 23A, and a drain portion 57 having the drain pipe 28 described above is accommodated in the chamber 23B. A prefilter 34 is disposed at the front surface side of the chamber 23A so as to face the lower cover member 19 (Fig. 1). This prefilter 34 is formed so that the size thereof corresponds to the opening portion of the chamber 23A, and it is disposed so as to be fitted in the opening portion. When the lower cover member 19 is detached, the prefilter 34 is exposed, and it can be easily attached and detached.

The prefilter 34 comprises a rough dusts filter 25 for collecting materials having large particle sizes such as dust, etc. in the air which are sucked through the suction grilles 12 and the air suction port 15, and a middle performance filter 26 (Fig. 3) for collecting materials having a particle size (10µm) or more (for example, pollens) which are passed through the rough dust filter 25. pollens, dust, etc. floating in the air which is sucked from the air suction grilles 12 and the air suction port 15 are removed by the prefilter 34.

An electrical component box 39 is disposed on the partition plate 24 at the upper portion of the chamber 23A, and a gas-liquid contact member 53 is disposed above the electrical component box 39. A water receiving tray 42 for receiving electrolytic water dropped (discharged) from the gas-liquid contact member is disposed between the electrical component box 39 and the gas-liquid contact member 53. In the electrical component box 39 are accommodated a control board on which various kinds of devices constitutinga controller 39A (see Fig. 6) for controlling the air filtering apparatus 1 are mounted, and various kinds of electrical components such as a power supply circuit for supplying a power supply voltage to the fan motor, etc.

Furthermore, as shown in Fig. 4, a back side space 1A and a front side space 1B which are portioned by the gas-liquid contact member 53 are formed in the upper chamber 22. The back side space 1A intercommunicates with the air blowing port 31A of the air blowing fan 31 through an opening 21A formed in the support plate 21. Furthermore, two air guide plates 32A and 32B are formed at the upper portion of the back side space 1A so as to be inclined downwardly from the back side of the housing 11 to the front side thereof and so as to be positionally displaced from each other in the height direction, and the two air guide plates 32A and 32B are supported by frame members 32C. Therefore, air blown out from the air blow-out port 31A of the air blowing fan 31 impinges against the two air guide plates 32A, 32B, passes through a passage as indicated by arrows in Fig. 4, and then is blown to the back surface of the gas-liquid contact member 53. That is, an air flowing passage directing from the lower chamber 23 to the upper chamber 22 is formed in the housing 11, and the gas-liquid contact member 53 is disposed above the air flowing passage.

The gas-liquid contact member 53 is a member for bringing electrolytic water into contact with air blown to the gas-liquid contact member 53. Air sucked into the housing 11 is brought into contact with electrolytic water containing a predetermined active oxygen species in the gas-liquid contact member 53, whereby virus, etc. contained in the air are inactivated and thus the air is filtered.

A housing 33 is disposed at the front side of the gas-liquid contact member 53, and the front side space 1B is formed by the housing 33 and the gas-liquid contact member 53. The housing 33 has a function of guiding air in the front side space 1B to the air blow-out port 13 and also receiving water blown out from the gas-liquid contact member 53 (so-called scattering water). Specifically, the housing 33 is designed so that the inner bottom surface 33A thereof is downwardly sloped to the gas-liquid contact member 53, and the tip portion of the bottom surface 33A extends to the upper side of the water receiving tray 42. Accordingly, water blown out to the front side space 1B is returned to the water receiving tray 42 through the bottom surface 33A.

An air blow-out filter 36 for preventing invasion of foreign materials from the air blow-out port 13 into the housing 11 is disposed between the housing 33 and the air blow-out port 13. It is preferable that the air blow-out port filter 36 is formed of a properly coarse-textured material so that the draft resistance of air passing through the gas-liquid contact member 53 is not remarkably increased.

The gas-liquid contact member 53 is formed of a filter member having a honeycomb structure, and it is designed so that an element portion coming into contact with gas is supported by a frame. As not shown in the figures, the element portion has a laminate structure of wave-shaped corrugated members and flat-plate type flat members, and many substantially triangular openings are formed between these corrugated members and the flat members. Accordingly, the gas contact area of the element portion when air is passed through the element portion is kept broad, electrolytic water can be dropped to the element portion and the element portion is designed so as to be hardly clogged.

The element portion is formed of material which is little deteriorated by electrolytic water, such as polyolefin resin (polyethylene resin, polypropylene resin), PET (polyethylene terephthalate) resin, vinyl chloride resin, fluorinated resin (PTFE, PFA, ETFE or the like), ceramics-based material or the like, and in this construction PET resin is used for the element portion. Furthermore, the element portion is subjected to a hydrophilic treatment to enhance the affinity to electrolytic water, whereby the water rententivity (wettability) of the gas-liquid contact member 53 to electrolytic water is enhanced, and the contact between active oxygen specifies (active oxygen material) and indoor air can be continued for a long time.

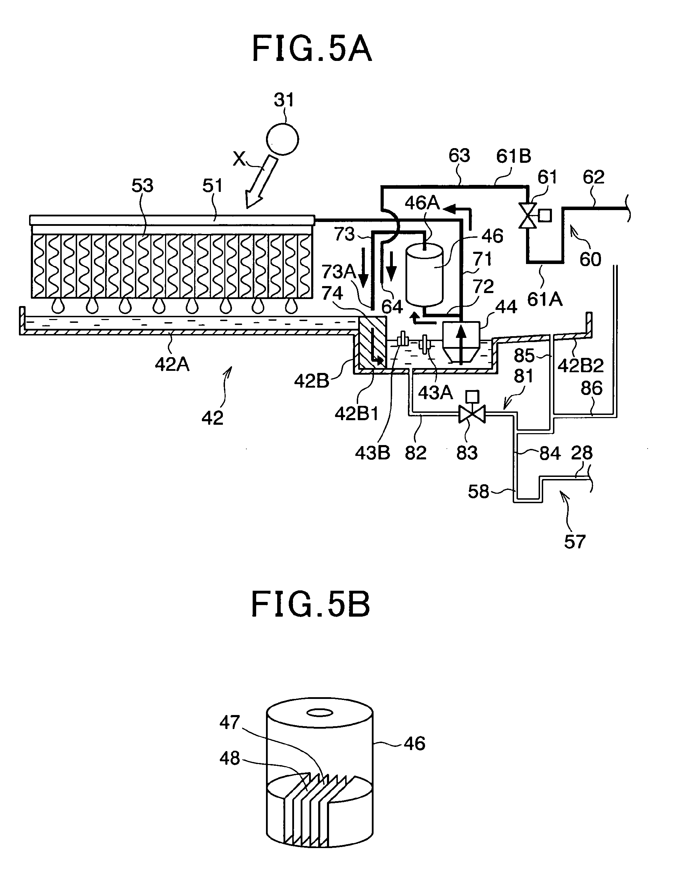

Furthermore, as shown in Fig. 5, a water spraying box 51 for uniformly dispersing (spraying) electrolytic water onto the gas-liquid contact member 53 is installed to the upper portion of the gas-liquid contact member 53. The water spray box 51 has a tray member for temporarily stocking electrolytic water, and plural water spray holes (not shown) are opened in the side surface of the tray member so that electrolytic water is dropped through the water spray holes to the gas-liquid contact 53.

A water distributing sheet (not shown) for efficiently dispersing electrolytic water dropped from the water spray box 51 to the element portion is disposed on the top surface of the gas-liquid contact member 53. The distributing sheet is formed of fiber material having liquid infiltration property (woven fabric, non-woven cloth or the like), and one or plural distributing sheets are provided along the cross-section to the thickness direction of the gas-liquid contact member 53.

As shown in Figs. 3 and 5, the water receiving tray 42 has a water receiving portion 42A located at the lower side of the gas-liquid contact member 53 and a stock portion 42B extending to the upper side of the other chamber 23B, and these elements are formed integrally with each other. Water flowing from the water receiving portion 42A is stocked in the stock portion 42B. Furthermore, the stock portion 42B comprises a deep bottom portion 42B1 having a deeper bottom than the water receiving portion 42A and a shallow bottom portion 42B2 having a shallower bottom than the deep bottom portion 42B1.

A first float switch 43A and a second float switch 43B as a water level detecting unit for detecting the water level are disposed in the deep bottom portion 42B1. The first float switch 43A is a switch operating when the water level of the stock portion 42B underruns (is lower than) a predetermined lower limit water level (water supply starting water level), and the second float switch 43B is a switch operating when the water level of the stock portion 42B exceeds a predetermined upper limit water level (water supply stopping water level).

Furthermore, a circulating pump 44 is provided to the deep bottom portion 42B1. The circulating pump 44 operates according to the control of the controller 39A, and a supply pipe 71 for pumping water stocked in the deep bottom portion 42B1 (stock portion 42B) and supplying the pumped water through the water spray box 51 to the gas-liquid contact member 53 is connected to the discharge port of the circulating pump 44. The supply pipe 71 is connected to an electrolytic bath 46 through a branch pipe 72 branched between the circulating pump 44 and the water spray box 51.

As described later, plural electrodes are contained in the electrolytic bath 46, and a voltage is applied among these electrodes to electrolyze water in the electrolytic bath 46, thereby generating electrolytic water containing active oxygen species. A return pipe connection port 46A to which a return pipe 73 for returning electrolytic water generated in the electrolytic bath 46 to the stock portion 42B is connected is formed in the top surface of the electrolytic bath 46.

Furthermore, a filter member 74 for collecting foreign materials (solid materials) contaminated in water flowing in the stock portion 42B is disposed at the inlet portion of the stock portion 42B, that is, at the interconnection portion between the stock portion 42B and the water receiving portion 42A. An outlet port 73A of the return pipe 73 is provided above the filter member 74, whereby solid materials (for example, scale components formed on the electrode surfaces) discharged together with water from the electrolytic bath 46 can be collected. This filter member 74 is disposed at the inlet port of the stock portion 42B so that it can be viewed from the upper side, so that it can be easily judged to visually recognize the replace timing of the filter member 74. Furthermore, when the filter member 74 is replaced, it may be detached and replaced by new one by fingers, so that the maintenance can be easily performed without using any tool.

In this embodiment, a part of water pumped up by the circulating pump 44 is supplied to the gas-liquid contact member 53 through the water spray box 51, and the remaining water is supplied to the electrolytic bath 46. Electrolytic water generated in the electrolytic bath 46 is supplied to the stock portion 42B through the filter member 74, and the electrolytic water stocked in the deep bottom portion 42B1 of the stock portion 42B is distributed and supplied to the gas-liquid contact member 53 and the electrolytic bath 46 again by the circulating pump 44. As described above, by repetitively electrolyzing electrolytic water in the electrolytic bath 46, electrolytic water having a high concentration of active oxygen species can be generated. Furthermore, electrolytic water discharged from the gas-liquid contact member 53 is used in a circulating style as electrolysis target water, whereby water resource can be effectively used.

As shown in Fig. 3, a water supply portion 60 for supplying tap water from the water supply pipe 27 to the water receiving tray 42 is provided above the deep bottom portion 42B1. The water supply portion 60 is connected to the water supply pipe 27 through the water supply pipe connection port 14 formed in the back surface of the housing 11. The water supply portion 60 is equipped with a water supply valve 61 which is opened/closed in accordance with the water level of the stock portion 42B, a first water supply pipe 62 which is connected to the water supply pipe connection port 14 at one end thereof and connected to an upstream side end portion 61A of the water supply valve 61 at the other end thereof, a secondwater supply pipe 63 connected to a downstream end portion 61B of the water supply valve 61, and a water supply port 64 which is opened downwardly at the tip of the second water supply pipe 63.

The water supply valve 61 is an electromagnetic valve which is opened/closed under the control of the controller 39A in accordance with the water level detected by the first float switch 43A and the second float switch 43B. The water supply valve 61 is disposed so that the upstream end portion 61A thereof is located at the lower position and the downstream end portion 61B is located at the upper position. That is, it is disposed so that water supplied to the water supply portion 60 flows from the lower side to the upper side in the water supply valve 61. Accordingly, even if water leakage occurs at the connection portion between the upstream end portion 61A of the water supply valve 61 and the first water supply pipe when the water supply valve 61 is opened, the leaking water can be prevented from being applied to the water supply valve 61, so that occurrence of a trouble such as electric leakage or the like due to the water leakage can be prevented.

Furthermore, the water supply port 64 of the second water supply pipe 63 is disposed so as to be spaced from the water surface of water stocked in the water receiving tray 42 at such a sufficient distance that the water supply port 64 does not touch the water surface concerned (in this embodiment, so as to be spaced from the upper end surface of the water receiving tray 42 .at a distance of 35mm). Accordingly, even when the inner pressure of the water supply portion 60 and the water supply pipe 27 is negative, water stocked in the water receiving tray 42 is prevented from flowing back into the water supply portion 60 and the water supply pipe 27 through the water supply port 64.

Furthermore, the water supply port 64 is disposed above the filter member 74. Accordingly, water supplied through the water supply port 64 is dropped onto the filter member 74, so that the sound induced by the dropping can be reduced and thus the water supply sound can be suppressed.

In this embodiment, tap water from the water supply pipe 27 is not directly introduced into the electrolytic bath 46. That is, this embodiment is provided with the water supply portion 60 for supplying tap water onto the water receiving tray 42 once is provided, and water stocked in the water receiving tray 42 is introduced into the electrolytic bath 46 by the circulating pump 44. Accordingly, by supplying fresh water from the water supply portion 60 to the water receiving tray 42, fresh water and electrolytic water dropped from the gas-liquid contact member 53 are mixed with each other, and fresh water can be supplemented to electrolytic water with a simple construction. Furthermore, the water supply portion 60 is provided separately from an electrolytic water circulating passage. Therefore, fresh water may be supplied in accordance with the amount of water stocked in the deep bottom portion 42B1, and thus the water supply control can be simplified.

Furthermore, the water supply portion 60 is disposed above the deep bottom portion 42B1, and thus a space is formed above the deep bottom portion 42B1 by detaching the water supply portion 60. Accordingly, by disposing a water supply tank in this space, fresh water can be supplied from the water supply port of the water supply tank to the water receiving tray 42. Accordingly, most of the apparatus construction in the air filtering apparatus 1 can be made common between the case where the water supply portion 60 is disposed above the deep bottom portion 42B1 and the case where the water supply tank is disposed. Therefore, any one of a water-pipe based water supply system for directly supplying city water by connecting the water supply pipe 27 to a water supply source and a water supply tank system can be selected in accordance with user's preference or an environment where the air filtering apparatus is disposed, and thus the degree of freedom of selecting an apparatus can be broadened for users.

Furthermore, this embodiment is designed so that water stocked in the water receiving tray 42 can be properly discharged. Specifically, a drain valve unit 81 for discharging water stocked in the water receiving tray 42 to the drain portion 57 is disposed on the support plate 21 below the stock portion 42B. The drain valve unit 81 is equipped with a first drain pipe 82 intercommunicating with the bottom portion of the deep bottom portion 42B1 of the stock portion 42B, a drain valve 83 connected to the first drain pipe 82 and a second drain pipe 84 connected to the drain valve 83, and the second drain pipe 84 is connected to the drain portion 57. The drain valve 83 is opened/closed under the control of the controller. The controller opens the drain valve 83 every time the air filtering operation time of the air filtering apparatus 1 reaches a predetermined time, every time the operation stop time of the air filtering apparatus 1 reaches a predetermined time, or every predetermined time so that water stocked in the deep bottom portion 42B1 is discharged to the external drain circuit through the drain portion 57.

Accordingly, the electrolytic water can be surely discharged with a simple construction. Furthermore, the state of the first float switch 43A disposed in the deep bottom portion 42B1 is monitored by the controller, the drain state of the electrolytic water can be monitored. Furthermore, water is supplied to the water receiving tray 41 through the water supply portion 60 in connection with the reduction of the water level of the deep bottom portion 42B1. This water is supplied not only to the water receiving tray 42, but also to the electrolytic bath 46 and the gas-liquid contact member 53 through the circulating pump 44. Accordingly, fresh water can be circulated to the respective members, not only water can be replaced, but also the respective members can be cleaned with water.

Furthermore, an overflow pipe (bypass pipe) 85 is connected to the bottom portion of the shallow bottom portion 42B2 of the stock portion 42B, and the overflow pipe 85 is connected to the second drain pipe 84 between the drain valve 83 and the drain portion 57. Therefore, even when the water level in the deep bottom portion 42B1 increases and thus this water reaches the shallow bottom portion 42B2, this water is discharged to the external drain circuit through the overflow pipe 85, the second drain pipe 84 and the drain portion 57.

Still furthermore, an air vent pipe 86 having a smaller diameter than the second drain pipe 84 is connected to the second drain pipe 84. This air vent pipe 86 is used to discharge air in the drain valve unit 81 to the outside when water is drained, and the tip of the air vent pipe 86 is located at a sufficiently higher position than the water receiving tray 42.

The drain portion 57 is equipped with a trap pipe 58 connected to the second drain pipe 84, and a drain pipe 28 connected to the trap pipe 58. The trap pipe 58 is designed so that water is trapped in the trap pipe 58. Therefore, the drain pipe 28 and the drain valve unit 81 are insulated from each other by the water stocked in the trap pipe 58, so that odor of drain water in the drain circuit can be prevented from wafting in the air filtering apparatus 1.

Furthermore, the drain portion 57 is disposed in the chamber 23B so as to be located below the stock portion 42B, and thus a space is formed in the chamber 23B by detaching the drain portion 57. Accordingly, for example if a drain tank is disposed in this space and the drain valve 83 is opened, the water stocked in the water receiving tray 42 is discharged to the drain tank through the drain valve 83. Accordingly, most of the apparatus construction of the air filtering apparatus 1 can be made common between the case where the drain portion 57 is disposed in the chamber 23B and when the drain tank is disposed. Accordingly, any one of a pipe type drain system for directly discharging drain water to the external drain circuit through the drain portion 57 and a drain tank system can be selected in accordance with user's preference or an environment where the air filtering apparatus is disposed, and thus the degree of freedom of selecting the apparatus can be broadened for users.

Figs. 5A are diagrams showing an aspect of supplying electrolytic water, wherein Fig. 5A is a schematic diagram showing the construction of an air filtering mechanism, and Fig. 5B is a diagram showing the detailed construction of the electrolytic bath 46.

The supply of electrolytic water to the gas-liquid contact member 53 will be described with reference to Figs. 5A and 5B.

When an operation start instruction is input to the air filtering apparatus 1, the water supply valve 61 is opened/closed in accordance with the water level of the stock portion 42B detected by the first float switch 43A and the second float switch 43B under the control of the controller 39A, so that water is supplied to the stockportion 42B or water supply is stopped. Specifically, when the water level of the stock portion 42B is detected and the detected water level does not reach a predetermined water level, the water supply valve 61 is opened to supply tap water to the water receiving tray 42, and the water level of the stock portion 42B of the water receiving tray 42 is reaches the predetermined water level.

Water in the stock portion 42B is pumped by the circulating pump 44, and a part of the water is supplied to the electrolytic bath 46. As shown in Fig. 5B, the electrolytic bath 46 has at least a pair of electrodes 47 and 48 one of which is set to a positive polarity while the other electrode is set to a negative polarity. By applying a voltage between the electrodes 47 and 48, tap water flowing in the electrolytic bath 46 is electrolyzed and electrolytic water containing active oxygen species is generated.

Here, the active oxygen species is oxygen having higher oxidizing activity than normal oxygen and relevant materials thereto, and contain not only so-called narrowly-defined active oxygen such as superoxide anion, singlet oxygen, hydroxyl radical and hydrogen peroxide, but also so-called broadly-defined active oxygen such as ozone, hypochlorous acid, hypohalous acid, etc.

The electrodes 47, 48 are constructed by two electrode plates each of which comprises a base of Ti (titan) and a coated layer of Ir (iridium), Pt (platinum). The current value flowing in the electrodes 47, 48 is set so that the current density thereof is equal to several mA (milliamperes)/cm² (square centimeter) to several tens mA/cm², and a predetermined concentration of free residual chlorine (for example, 1mg (milligram)/1(liter) is generated.

More specifically, by supplying current to tap water through the electrodes 47, 48, hydrogen ion (H⁺) and hydroxide ion in water react with each other according to the following reaction formula (1) at the cathode:

4H⁺ + 4e⁻ + (40H⁻)→) 2H₂ + (40H⁻) (1)

Furthermore, water is electrolyzed according to the following reaction formula (2) at the anode:

2H₂O → 4H⁺ + O₂ + 4e⁻ (2)

At the same time, chlorine ion (Cl⁻) contained water reacts according to the following reaction formula (3), and chlorine (Cl₂) is generated:

2Cl⁻ → Cl₂ + 2e⁻ (3)

Furthermore, Cl₂ thus generated reacts with water and hypochlorous acid (HClO) and hydrogen chloride (HCl) is generated:

Cl₂ + H₂O → HClO + HCl (4)

Hypochlorous acid occurring at the anode is contained in the broadly-defined active oxygen species and has strong oxidizing action and a bleaching action. Water solution in which hypochlorous acid is dissolved, that is, electrolytic water generated in the air filtering apparatus 1 exercises various kinds of air cleaning effects such as inactivation of virus, etc., sterilization, decomposition of organic compounds, etc. When electrolytic water containing hypochlorous acid is dropped from the water spray box 51 to the gas-liquid contact member 53, air blown out from the air blowing fan 31 is brought into contact with hypochlorous acid in the gas-liquid contact member 53. Accordingly, virus, etc. floating in the air are inactivated, and also odor materials contained in the air concerned react with hypochlorous acid to be decomposed or ionized, so that the order materials are dissolved in the water. Accordingly, air filtering and deodorization are performed, and cleaned air is discharged from the gas-liquid contact member 53.

An inactivating mechanism of virus, etc. by the active oxygen species will be described by exemplifying influenza virus. The active oxygen species functions to break down and vanish (remove) the surface protein (spike) of the virus concerned which is indispensable for infection. When the surface protein of influenza virus is broken down, the influenza virus is not joined to a receptor which is necessary for infection of the virus concerned, so that infection can be prevented. Therefore, influenza virus floating in the air is brought into contact with the electrolytic water containing the active oxygen species in the gas-liquid contact member 53, so that the influenza virus loses so-called infection power, and thus the infection can be prevented.

Accordingly, even when the air filtering apparatus 1 is set in a so-called large-space environment such as a kindergarten, an elementary/junior high/high school, long-term care insurance facilities, a hospital or the like, the air filtering apparatus 1 is not constructed so that electrolytic water mist is diffused into a room, but constructed so that air cleaned (filtered, deodorized, etc.) by electrolytic water is blown to the room, and thus the filtered air can be made to widespread broadly in the large space, so that air filtering and deodorization in a large space can be efficiently performed.

Here, the electrode switching operation of setting any side of the electrodes 47, 48 in the electrolytic bath 46 to positive potential can be performed by inverting the polarities of the electrodes. In this embodiment, it can be performed by changing (inverting) the voltage applied to the electrodes 47, 48 under the control of the controller.

Furthermore, the concentration of active oxygen species in electrolytic water is adjusted so that virus, etc. to be filtered can be inactivated. The adjustment of the concentration of the active oxygen species is performed by adjusting the voltage applied between the electrodes 47 and 48 and thus adjust the current value flowing between the electrodes 47 and 48. For example, when the positive potential is applied to the electrode 47 and the current value flowing between the electrodes 47 and 48 is set to 20mA/cm² in current density, a predetermined concentration of free residual chlorine (for example, 1mg/l) can be generated. Furthermore, the current value is increased by changing the voltage applied between the electrodes 47 and 48, whereby the concentration of hypochlorous acid can be adjusted to a high concentration.

The electrolytic water dropped from the water spray box 51 to the gas-liquid contact member 53 moves downwardly along the gas-liquid contact member 53, and drops to the water receiving portion 42A of the water receiving tray 42. The electrolytic water dropping to the water receiving portion 42A flows through the filter member 74 into the stock portion 42B. Then, the electrolytic water is pumped by the circulating pump 44 again, and passed through the electrolytic bath 46 to the gas-liquid contact member 53. As described above, in the construction of this embodiment, an electrolytic water circulating passage through which electrolytic water is circulated is formed, and thus air can be efficiently filtered for a long time by effectively using a small amount of water. Furthermore, the water supply from the water supply port 64 is adjusted in accordance with the water level in the stock portion 42B which is detected by the first float switch 43A and the second float switch 43B. For example, when the water level of the stock portion 42B is lower than the lower limit water level due to vaporization or the like, the water supply valve 61 is opened, and a proper amount of tap water is supplied from the water supply port 64. When the water level of the stock portion 42B is returned to the upper limit water value, the water supply valve 61 is closed. Therefore, water is supplied from an external water supply source by only the amount corresponding to the shortfall caused by vaporization or the like.

Furthermore, the electrolytic water generated in the electrolytic bath 46 is not directly supplied to the gas-liquid contact member, but it is first guided through the filter member 74 to the stock portion 42B. Therefore, the electrolytic water containing foreign materials such as scale, etc. generated in the electrolytic bath 46 can be prevented from being supplied to the gas-liquid contact member 53. Furthermore, the concentration of the active oxygen species is diluted in the stock portion 42B. Therefore, electrolytic water containing active oxygen species whose concentration is higher than the concentration of active oxygen species to be supplied to the gas-liquid contact member 53 can be generated. Therefore, as compared with the case where electrolytic water having a low concentration of active oxygen species is generated, the concentration can be easily managed.

According to this embodiment, the inside of the housing 11 is divided to upper and lower chambers in the vertical direction by the support plate 21. In the upper chamber 22 are disposed the electrolytic bath 46 for electrolyzing water to generate electrolytic water, the gas-liquid contact member 53 to which the electrolytic water is supplied, the water receiving tray 42 for receiving electrolytic water dropping from the gas-liquid contact member 53, an the circulating pump 44 for pumping water stocked in the water receiving tray 42 and supplying the pumped water to the electrolytic bath 46. In the lower chamber 23 are disposed the air blowing fan 31 for blowing indoor air sucked into the housing 11 to the gas-liquid contact member 53, and the drain portion 57 which can discharge water stocked in the water receiving tray 42 to the outside. Furthermore, the water supply portion 60 which is connected to the water supply pipe 27 to supply water passing trough the water supply pipe 27 to the water receiving tray 42 is disposed above the water receiving tray 42. Therefore, various kinds of constituent elements can be disposed in an excellent arrangement.

Furthermore, according to this embodiment, by supplying freshwater from the water supplyportion 60 to the water receiving tray 42, the fresh water and the electrolytic water dropping from the gas-liquid contact member 53 are mixed with each other on the water receiving tray 42. Therefore, when electrolytic water is used under the state.that the electrolytic water is circulated, fresh water can be supplemented to circulating electrolytic water with a simple construction. Furthermore, the water supply portion 60 is provided separately from the passage in which electrolytic water is circulated, and thus water supply may be carried out in accordance with the amount of water stocked in the deep bottom portion, so that the water supply control can be simplified.

Still furthermore, according to this embodiment, the water supply portion 60 is equipped with the water supply valve 61 which is opened/closed in accordance with the water level of water stocked in the water receiving tray 42, the first water supply pipe 62 connected to the upstream side end portion 61A of the water supply valve 61, and the second water supply pipe 63 connected to the downstream side end portion 61B, and the water supply port 64 formed at the tip of the second water supply pipe 63 is provided so as to be spaced from the water surface of water stocked in the water receiving tray 42 at such a sufficient distance that it does not touch the water surface. Therefore, even when the inside of the water supply portion 60 and the water supply pipe 27 intercommunicating with the water supply portion 60 is set to negative pressure, water stocked in the water receiving tray 42 can be prevented from flowing back into the water supply portion 60 and the waters supply pipe 27 through the water supply port 64.

Still furthermore, according to this embodiment, the water supply valve 61 is disposed so that the downstream side end portion 61B of the water supply valve 61 is located at a higher position than the upstream side end portion 61A of the water supply valve 61. Therefore, even if water leakage from the connection portion between the upstream side end portion 61A of the water supply valve 61 and the first water supply pipe 62 occurs when the water supply valve 61 is closed, the leak water is not scattered to the water supply valve 61, so that occurrence of a trouble such as short circuit or the like due to the water leakage can be prevented.

Still furthermore, according to this embodiment, the water receiving tray 42 is equipped with the water receiving portion 42A which is disposed below the gas-liquid contact member 53 and receives electrolytic water, and the stock portion 42B which is formed to have a deeper bottom than the water receiving portion 42A and stocks electrolytic water and water supplied from the water supply portion 60. The water receiving tray 42 is further provided with the filter member 74 which is provided at the interconnection portion between the water receiving portion 42A and the stock portion 42B to collect solid materials which are contaminated in electrolytic water flowing from the water receiving portion 42A into the stock portion 42B, and the water supply port 64 of the water supply portion 60 is provided above the filter member 74. Therefore, water supplied through the water supply port 64 is dropped to the filter member 74, and thus the drop sound of water can be reduced, so that the water supply sound can be suppressed.

Next, the functional construction of the air filtering apparatus 1 according to this embodiment will be described with reference to Fig. 6.

As shown in Fig. 6, the air filtering.apparatus is equipped with the controller 39A, the first float switch 43A, the second float switch 43B, the water supply valve 61, the circulating pump 44, a time counter 39B and a water supply error lamp 16A1 as the functional constituent elements associated with the water supply control processing.

The controller 39A is provided with CPU, RAM, ROM< etc., and CPU executes various kinds of control programs by using a part of RAM as a working area according to various kinds of control programs containing a water supply control processing program, etc. stored in ROM, etc., thereby controlling the air filtering apparatus 1 concentratively.

As described above, the first float switch 43A and the second float switch 43B detect the water level in the stock portion 42B as described above, and outputs an ON/OFF signal to the controller 39 in accordance with the water level in the stock portion 42B. Specifically, the first float switch 43A is set to OFF when the water level in the stock portion 42B underruns the preset lower limit water level (water supply starting water level), and outputs an OFF signal as a first detection signal to the controller 39A. On the other hand, when the water level in the stock portion 42B exceeds the lower limit water level, the first float switch 43A is set to ON and outputs an ON signal to the controller 39A. Furthermore, when the water level in the stock portion 42B underruns the preset upper limit water level (water supply stopping water level), the second float switch 43B is set to OFF and outputs an OFF signal to the controller 39A. On the other hand, when the water level in the stock portion 42B exceeds the upper limit water level, the second float switch is set to ON and outputs an ON signal as a second detection signal to the controller 39A.

As described above, the water supply valve 61 is an electromagnetic valve which is opened/closed in accordance with the water level in the stock portion 42B under the control of the controller 39A. The controller 39A controls the water supply valve 61 so that when the OFF signal (first detection signal) is input from the first float switch 43A to the controller 39A, that is, when it is detected that the water level in the stock portion 42B underruns the lower limit water level, the water supply valve 61 is opened, and when the ON signal (second detection signal) is input from the second float switch 43B, that is, when it is detected that the water level in the stock portion 42B exceeds the upper limit water level, the water supply valve 61 is closed.

As described above, the circulating pump 44 pumps water (electrolytic water) stocked in the stock portion 42B so that electrolysis target water or electrolytic water supplied for air filtering is supplied to the electrolytic bath 46 and the gas-liquid contact member 53 to carry out the air filtering operation. At the start time of the air filtering operation, the circulating pump 44 is started after it is confirmed that the water level in the stock portion 42B reaches the upper limit water level.

Under the control of the controller 39A, the time counter 39B counts the time from the time point when the water supply valve 61 is opened, that is, at the time point when the water supply from the external power source to the stock portion 42B is started. If a predetermined time elapses, the time counter 39B outputs a signal indicating this fact to the controller 39A. Here, the predetermined time is set to such a sufficient time that the water level in the stock portion 42B reaches the upper limit water level from the state that no water is stocked in the stock portion 42B when water is supplied from the external water supply source through the water supply pipe to the stock portion 42B.

In this embodiment, the predetermined time is set to about 20 minutes, for example. This predetermined time is set by estimating a time required to supply water until the water level in the stock portion 42B exceeds the upper limit water level from the state that the water level of the stock portion 42B is equal to zero and then setting a proper time for detecting a water supply error on the basis of the time concerned. Furthermore, the interval (water supply interval) from the time when the water supply valve 61 is closed in the water supply operation till the next water supply is started is changed in accordance with the temperature and humidity of a room in which the air filtering apparatus 1 is set. For example, in the winter season in which air is dried, the water-level lowering speed in the stock portion 42B is high because of vaporization or the like, and thus the water supply interval is short. On the other hand, in the summer season in which air is humid, the water consumption amount is reduced and also the water supply interval is long.

Furthermore, the water supply lamp 16A1 is turned on by the controller 39A when the water level in the stock portion 42B is not restored although the predetermined time counted by the time counter 39B elapses, and it makes an error report concerning water supply to a user or the like. The water supply error lamp 16A1 is turned off when a water supply request flag contained in the controller 39A is set to OFF state, and turned on when the water supply request flag is set to ON state.

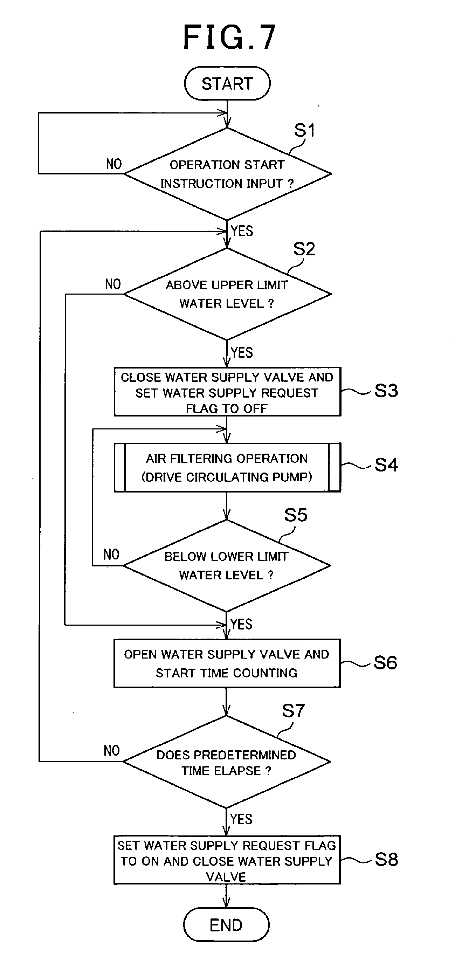

The operation concerning the water supply control according to this embodiment will be described in detail with reference to Fig. 7. Fig. 7 is a flowchart showing the procedure of the water supply control processing, and the water supply control processing is executed in cooperation of the respective parts under the control of the controller 39A.

As shown in Fig. 7, when the air filtering apparatus 1 is powered on and an operation start instruction is input through the operation panel 16A to the controller 39A (step S1: Y), the controller 39A judges on the basis of the ON/OFF signal input from the second float switch 43B whether the water level in the stock portion 42B reaches the upper limit water level (step S2) .

If it is judged in step S2 that the water level in the stock portion 42B reaches the upper limit water level (step S2: Y), the water supply valve 61 is closed and the water supply flag is set to OFF state (step S3). Subsequently, the circulating pump 44 is driven to start a pumping operation of water (electrolytic water) in the stock portion 42B , etc., whereby the air filtering operation is started (step S4).

In step S4, after the air filtering operation is once started, when the OFF signal is input from the first float switch 43A, that is, when the water level in the stock portion 42B underruns the lower limit water level (step S5: Y), the controller 39A opens the water supply valve 61 to supply water from the external water supply source to the stock portion 42B (step S6).

If the water level in the stock portion 42B reaches the upper limit water level (step S2:Y) before the predetermined time elapses (step S7: N), the above processing is repeated. That is, the water supply control is carried out.so that the water supply valve 61 is opened to supply water until the water level reaches the upper limit water level when it is judged on the basis of the ON/OFF signal input from the first float switch 43A and the second float switch 43B that the water level in the stock portion 42B underruns the lower limit water level while the pumping operation of water (electrolytic water) in the stock portion 42B by the circulating pump 44 is continued (step S4) .

Here, when the predetermined time elapses from the time when the water supply valve 61 is opened by the controller 39A (step S7: Y), but the water level in the stock portion 42B does not reach the upper limit water level (step S2:N), it is considered that an external water supply valve provided to the water supply pipe 27 may be kept closed or a water supply error may occur. Therefore, the water supply request flag is set to ON state so as to turn on the water supply error lamp 16A1 and the water supply valve 61 is closed (step S8).

ON the other hand, if it is judged in step S2 that the water level in the stock portion 42B does not reach the upper limit water level (step S2: N) when the operation start instruction is input (step S1: Y), the processing goes to step S7 so that the water supply valve 61 is controlled to be opened even when the water level in the stock portion 42B exceeds the lower limit water level, that is, even when the water level is not the water supply starting water level (step S6) . Then, as in the case of the above operation, the open state of the water supply valve 61 is kept until the water level in the stock portion 42B reaches the upper limit water level (step S2: Y), and if the water level in the stock portion 42B reaches the upper limit water level (step S2: Y), the water supply valve 61 is closed and the circulating pump 44 is startedto start the air filtering operation as described above (step S4). In this case, if the water level in the stock portion 42B does not reach the upper limit water level (step S2: N) even when the predetermined time elapses from the start of the water supply (step S7: Y), the water supply request flag is likewise set to ON state to report a water supply error to a user, and the water supply valve 61 is closed (step S8).

As not shown in Fig. 7, before water in the stock portion 42B is discharged to the outside, the controller 39A opens the water supply valve 61 irrespective of the presence or absence of the first detection signal input from the first float switch 43A as in the case of the start time of the operation so that water is supplied until the water level in the stock portion 42B exceeds the upper limit water level.

As described above, the air filtering apparatus according to this embodiment is not configured so that electrolytic water mist is diffused into a room, but it is designed so that air supplied through the air flowing passage directing from the lower chamber in the housing 11 to the upper chamber is brought into contact with electrolytic water in the gas-liquid.contact member 53 to be filtered, and the filtered air is blown out through the air flowing passage to the outside of the housing 11. Therefore, the indoor air can be circulated, and air in a large space can be filtered.

Furthermore, the water receiving tray 42 has the water receiving portion 42A disposed below the gas-liquid contact member 53 and receives electrolytic water dropped from the gas-liquid contact member 53 at the water receiving portion 42A. The electrolytic water is stocked in the stock portion 42B, and then supplied to the electrolytic bath 46 as electrolysis target water again by the circulating pump 44. Therefore, the electrolytic water can be used in a circulating style, and thus the consumption amount of water supplied from an external water supply source can be reduced. Furthermore, the controller 39A controls the water supply valve 61 of the water supply pipe so that the water supply valve 61 is opened/closed in accordance with the water level of the stock portion 42B, and thus water can be supplied from the external water supply source by only the amount corresponding to the shortfall caused by vaporization or the like. That is, even when the indoor temperature, the indoor humidity or the like is varied in accordance with the season, weather or the like and thus the vaporization amount or the like varies, only the water amount corresponding to the shortfall corresponding to the vaporization amount or the like can be supplied to the stock portion 42B.

Furthermore, as described above, electrolytic water is used in a circulating style, so that the consumption amount of water can be reduced. Accordingly, only water may be supplied from an external water supply source by only the amount corresponding to shortfall. Therefore, as compared with the case where electrolytic water is not used in a circulating style, the frequency of the opening/closing the water supply valve 61 can be reduced, and thus the expected lifetime of the water supply valve 61 can be lengthened.

Still furthermore, in this embodiment, water as electrolysis target is not directly supplied to the electrolytic bath 4 6 through the water supply pipe, but water is once supplied from an external water supply source to the stock portion 42B and then water stocked in the stock portion 42B is supplied to the electrolytic bath 46. Therefore, most of the construction of the apparatus can be made common between the case where the water supply tank is provided as an internal water supply source in the air filtering apparatus 1 and the case where water is supplied from an external water source.

Furthermore, according to the above embodiment, the first float switch 43A and the second float switch 43B are provided as a water level detecting unit for detecting the water level in the stock portion 42B, and on the basis of the first detection signal and the second detection signal input from the first and second float switches 43A and 43B, the water supply valve 61 is controlled to be opened/closed so that water is supplied by only the amount corresponding to the amount of lost water due to vaporization or the like.

Still furthermore, according to the above embodiment, if it is judged that the water level in the stock portion 42B does not reach the water supply stopping water level when the operation start instruction to the air filtering apparatus 1 is input, the water supply valve 61 is opened, and it is kept opened until the water level in the stock portion 42B exceeds the water supply stopping water level. Therefore, when the air filtering operation is started, the water level in the stock portion 42B can be necessarily set to the water supply stopping water level, that is, the stock portion 42B can be set to a water filled state, and the water amount corresponding to the amount held in the gas-liquid contact member 53 for a fixed time can be secured.

Still furthermore, according to the above embodiment, the overflow pipe 85 is connected to the bottom portion of the shallow bottom portion 42B2 of the stock portion 42B, and water reaching the shallow bottom portion 42B2 can be discharged to the outside by the overflow pipe 85. Therefore, even when the water in the stock portion 42B reaches the shallow bottom portion 42B2 by electrolytic water, etc. flowing from the water receiving portion 42A until it is detected on the basis of the ON signal (second detection signal) input from the second float switch 43B that the water level in the stock portion 42B exceeds the upper limit water level and the water supply valve 61 is closed, excessive water can be discharged from the water receiving tray 42 to the outside without overflow from the water receiving tray 42. In other words, when the ON signal is input from the second float switch 43B, the water supply valve 61 may be closed after a slight delay time from the input of the ON signal. By closing the water supply valve 61 after the delay time, the water level in the stock portion 42B can be set to be equal to or higher than the upper limit water level, and thus water can be surely supplied to the same water level as the bottom portion of the shallow bottom portion 42B2.

Furthermore, according to the above embodiment, if the water level in the water receiving tray 42 does not reach the water supply stopping water level even when the water supply valve 61 provided to the water supply pipe is opened or a predetermined water supply time elapses, an error may be reported to a user or the like.

The air filtering apparatus 1 according to the above embodiment is an example of the present invention, and various kinds of modifications may be made without departing from the subject matter of the present invention.

For example, ozone (O₃) or hydrogen peroxide (H₂O₂) may be generated as active oxygen species. In this case, when platinum tantalum electrodes are used as the electrodes 47, 48, active oxygen species can be highly efficiently and stably generated from even water in which ion species are rare.

At this time, at the anode, the following reaction occurs:

2H₂O → 4H⁺ + O₂ + 4e⁻

Simultaneously with the above reaction, the following reactions occur, and ozone (O₃) is generated.

3H₂O → O₃ + 6H⁺ + 6e⁻

2H₂O → O₃ + 4H⁺ + 4e⁻

Furthermore, at the cathode, the following reactions occur:

4H⁺ + 4e⁻ + (4OH⁻) → 2H₂ + (4OH⁻¹)

O₂⁻ + e⁻ + 2H⁺ → H₂O₂

That is, O₂⁻ generated through the electrode reaction and H⁺ in solution are bonded to each other to generate hydrogen peroxide (H₂O₂).

In the above embodiment, tap water is supplied form the water supply pipe 27. Tap water is added with chlorine compounds for sterilization, and thus and thus chlorine ions are contained in tap water. The chlorine ions react with water to generate hypochlorous acid and hydrochloric acid. This is not limited to the case where tap water is used, but active oxygen species containing halogen are generated according to the same reaction insofar as water supplied from the electrolytic bath 46 contains halogen compound ions because of addition or contamination of halogen compound.

Furthermore, in the air filtering apparatus 1, the same reaction can be induced even when water having rare ion species (containing pure water, purified water, well water, some kinds of tap water, etc.) is used. That is, if halogen compound (salt or the like) is added to water containing rare ion species, the same reaction can be induced to obtain active oxygen species.

Still furthermore, in order to discharge water stocked in the water receiving tray 42, the drain portion 57 is provided with the drain pipe 28. However, the present invention is not limited to this style. For example, a drain tank for receiving drain water may be provided in the other chamber 23B. According to this construction, even under the environment that there is not provided any drain facilities for connecting a drain pipe, water discharged from the water receiving tray 42 can be simply stocked. In this case, the drain tank is preferably designed so that it can be pulled out to the front side of the other chamber 23B. According to this construction, by merely detaching the lower cover member 19 of the air filtering apparatus 1, the drain tank is exposed, so that water stocked in the drain tank can be discarded by pulling out the drain tank.

Still furthermore, according to the above embodiment, the water supply portion 60 connected to the water supply pipe 27 is provided to supply water to the water receiving tray. However, the present invention is not limited to this style. For example, a water supply tank may be disposed above the shallow bottom portion 42B2 of the water receiving tray 42. In this case, a float valve is provided to the water supply port formed at the lower end of the water supply tank, and the float valve is opened when the water level of the stock portion 42B is lower than the water supply port, whereby a desired amount of water can be supplied from the water supply tank.

According to this construction, even under the environment that it is impossible to lay the water supply pipe 27, water can be simply supplied to the water receiving tray 42. In this case, a tank take-out port through which the tank supply tank is inserted and taken out and a tank opening/closing lid for opening/closing the tank take-out port may be formed in the top surface of the housing 11. According to this construction, by opening the tank opening/closing lid, the water supply tank can be easily inserted and taken out from the tank take-out port.

## Claims

1. An air filtering apparatus comprising a housing, an electrolytic water generator for generating electrolytic water by electrolyzing water, a gas-liquid contact member to which electrolytic water is supplied, a water receiving tray that is disposed below the gas-liquid contact member and receives electrolytic water discharged from the gas-liquid contact member, an electrolytic water circulating unit for supplying the electrolytic water received in the water receiving tray as electrolysis target water to the electrolytic water generator, an air blower for blowing indoor air to the gas-liquid contact member to bring the indoor air into contact with the electrolytic water in the gas-liquid contact member, thereby filtering the air, and a water supply unit that is disposed above the water receiving tray and supplies water to the water receiving tray.

2. The air filtering apparatus according to claim 1, wherein the water supply unit has a water supply pipe connected to an external water source to supply water from the external water source through the water supply pipe to the water receiving tray.

3. The air filtering apparatus according to claim 2, wherein the water supply unit is further equipped with a water supply valve that is opened or closed in accordance with the water level of water stocked in the water receiving tray, a first water supply pipe connected to an upstream side end portion of the water supply valve, and a second water supply pipe connected to a downstream side end portion of the water supply valve and having a water supply port formed at one end thereof, the water supply port being disposed to be spaced from the water surface of the water stocked in the water receiving tray at such a distance that the water supply port is prevented from touching the water surface of the water stocked in the water receiving tray.

4. The air filtering apparatus according to claim 2, wherein the water supply valve is disposed so that the downstream side end portion thereof is located at a higher position than the upstream side end portion thereof.

5. The air filtering apparatus according to claim 2, wherein the water receiving tray has a water receiving portion that is disposed below the gas-liquid contact member and receives the electrolytic water, a stock portion which is formed to have a deeper bottom portion than the water receiving portion and stocks the electrolytic water and water supplied from the water supply unit, and a filter member that is disposed at the interconnection portion between the water receiving portion and the stock portion and collects solid materials contaminated in the electrolytic water flowing from the water receiving portion into the stock portion, the water supply port being disposed above the filter member.

6. The air filtering apparatus according to claim 1, wherein the water supply unit has a water supply pipe that is connected to an external water supply source and supplies water from the external water source therethrough to the water receiving tray, and a water supply valve that is provided in the water supply pipe and opened/closed to adjust the water supply to the water receiving tray through the water supply pipe.

7. The air filtering apparatus according to claim 6, further comprising a water level detecting unit for detecting the water level of the water stocked in the water receiving tray, and a controller for controlling the opening/closing operation of the water supply valve in accordance with the water level detected by the water level detecting unit, whereby the amount of water to be supplied to the water receiving tray is adjusted in accordance with the water level detected by the water level detecting unit.

8. The air filtering apparatus according to claim 7, wherein the water level detecting unit comprises a first float switch for outputting a first detection signal to the controller when the water level in the water receiving tray underruns a predetermined water-supply starting water level, and a second float switch for outputting a second detection signal to the controller when the water level in the water receiving tray exceeds a predetermined water-supply stopping water level, and the controller controls the water supply valve so that the water supply valve is opened when the controller receives the first detection signal from the first float switch and is closed when the controller receives the second detection signal from the second float switch.

9. The air filtering apparatus according to claim 8, wherein when receiving an air filtering operation starting instruction, the controller judges on the basis of the presence of absence of the input of the second detection signal whether the water level in the water receiving tray reaches the water-supply stopping water level, and if it is judged that the water level in the water receiving tray does not reach the water-supply stopping water level, the controller opens the water supply valve irrespective of the presence or absence of the input of the first detection signal, and keeps the water supply valve open until the second detection signal is input.

10. The air filtering apparatus according to claim 8, wherein the controller reports an error when the second detection signal is not input until a predetermined water supply time elapses from the opening time of the water supply valve.

11. The air filtering apparatus according to claim 7, wherein the water receiving tray comprises a water receiving portion that is disposed below the gas-liquid contact member and receives the electrolytic water, a stock portion interconnected to the water receiving portion and formed to have a deeper bottom than the water receiving portion, and a filter member that is disposed at the interconnection portion between the water receiving portion and the stock portion and removes foreign materials contaminated in water flowing from the water receiving portion into the stock portion, the water supply port of the water supply pipe being disposed above the filter member.

12. The air filtering apparatus according to claim 5, wherein the electrolytic water generated in the electrolytic water generator is passed through the filtermember to the stock portion, and mixed with waster supplied from the water supply unit, and the electrolytic water mixed with the water supplied from the water supply portion in the stock portion is supplied to at least one of the electrolytic water generator and the gas-liquid contact member through the electrolytic water circulating unit.

13. The air filtering apparatus according to claim 1, further comprising a drain unit that is disposed below the water receiving tray so as to be connected to the water receiving tray and discharges the water stocked in the water receiving tray to the outside, wherein the housing is divided into an upper chamber and a lower chamber by a partition plate, the electrolytic water generator, the gas-liquid contact member, the water receiving tray, the electrolytic water circulating unit and the water supply unit are disposed in the upper chamber, and the air blower and the drain unit are disposed in the lower chamber.

14. The air filtering apparatus according to claim 13, wherein the water receiving tray has a deep bottom portion and a shallow bottom portion having a shallower bottom than the deep bottom portion, and the drain unit includes a drain portion connected to an external drain circuit, and a drain valve unit comprising a drain pipe through which the deep bottom portion and the drain portion are connected to each other, a drain valve for opening/closing the drain pipe, and a bypass pipe that bypasses the drain valve and connects the shallow bottom portion and the drain portion.

15. The air filtering apparatus according to claim 1, wherein the drain portion has a trap pipe in which a part of water discharged from the water receiving tray is stocked as sealing water.
